**Europäisches Patentamt**

**European Patent Office**

**Office européen des brevets**

(19)

(11) Numéro de publication: **0 255 414
B1**

(12)

# FASCICULE DE BREVET EUROPEEN

(45) Date de publication du fascicule du brevet:
**27.12.90**

(51) Int. Cl.⁵: **G06F 12/14**

(21) Numéro de dépôt: **87401435.0**

(22) Date de dépôt: **23.06.87**

(54) **Circuit intégré de protection à mémoire comprenant deux régions d'adresses sélectionnables.**

(30) Priorité: **27.06.86 FR 8609358**

(43) Date de publication de la demande:
**03.02.88 Bulletin 88/5**

(45) Mention de la délivrance du brevet:
**27.12.90 Bulletin 90/52**

(84) Etats contractants désignés:
**DE ES FR GB IT NL**

(56) Documents cités:
**EP-A- 0 136 155
US-A- 3 986 169
US-A- 4 521 853**

(73) Titulaire: **SGS-THOMSON MICROELECTRONICS S.A., 7,
Avenue Galliéni, F-94250 Gentilly(FR)**

(72) Inventeur: **Fruhauf, Serge, THOMSON-CSF
SCPI 19, avenue de Messine, F-75008 Paris(FR)**

(74) Mandataire: **Schmit, Christian Norbert Marie et al,
Cabinet Ballot-Schmit 7, rue Le Sueur,
F-75116 Paris(FR)**

## Description

La présente invention concerne un intégré de protection à mémoire comprenant deux régions d'adresses sélectionnables. Elle trouve application dans le domaine de la protection matérielle (hardware) des logiciels et des données informatiques.

Dans un nombre croissant d'applications, le fabricant d'un circuit ou l'utilisateur primaire d'un tel circuit subit un risque de copiage des informations, programmes ou données, qu'il inscrit dans une mémoire du circuit. C'est le cas dans le domaine des ordinateurs à logiciels intégrés (moniteurs, systèmes d'exploitations, utilitaires) et aussi dans celui de la carte bancaire. Un moyen contiste à prévoir toutes les procédures d'accès matériel et à prévenir toute tentative non désirée par exemple par destruction de données. Selon un autre moyen, il s'agit de coder les données ou leur séquence de telle manière que l'information qu'elles contiennent devienne inexploitable telle quelle.

Malheureusement, l'ingéniosité des pirates, malgré la qualité des protections contraint le propriétaire à varier autant que possible les modes de protection physique. L'invention propose un moyen particulièrement avantageux. En effet, elle concerne un circuit élec- tronique comportant une mémoire à cellules de mots binaires caractérisé en ce qu'il comporte deux cellules programmées en parallèle, qui possèdent un unique chemin d'écriture et deux chemins de lecture connectés à un organe de gestion de mode de fonctionnement dont le contenu permet de sélectionner un mode particulier du fonctionnement du circuit, impliquant une région d'adresses particulières de la mémoire.

D'autres caractéristiques et avantages de la présente invention apparaîtront à l'aide de la description d'un exemple non limitatif de réalisation et des figures qui sont :

- la figure 1 : un schéma d'une cellule selon l'invention entourée de ses aides,
- la figure 2 : un schéma d'un circuit complet selon l'invention,
- la figure 3 : un chronogramme d'état de deux bus du circuit,
- la figure 4 : un schéma d'un motif de cellules de mémoire.

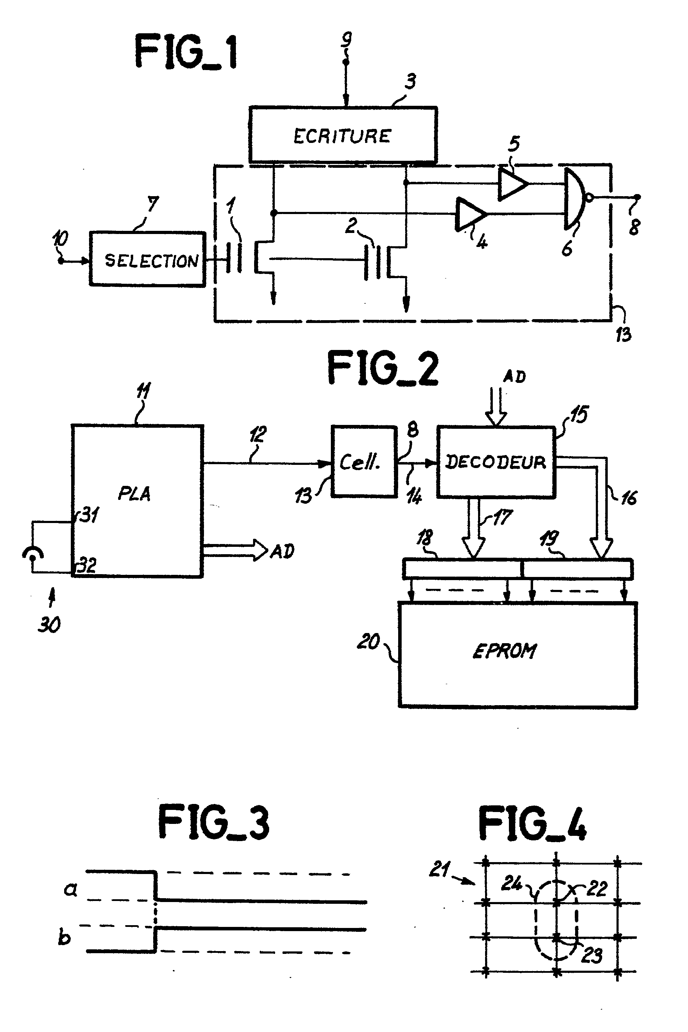

On a représenté à la figure 1 un circuit de gestion. Ce circuit comprend une cellule ou préférentiellement deux cellules d'une mémoire EPROM ce qui permet d'établir une redondance dans l'information de sélection. Chaque cellule est ici constituée par un seul transistor à grille isolée d'une mémoire de type EPROM. Les grilles des cellules 1 et 2 sont reliées à un organe de sélection 7 qui décode l'adresse reçue par la connexion 10. Le chemin d'écriture comporte un registre d'écriture 3 dont chacune des deux sorties est reliée à l'entrée de la cellule 1 ou 2 correspondante. L'entrée 9 du registre reçoit la donnée à inscrire à priori d'un organe de programmation extérieur au circuit à la disposition du légitime propriétaire de l'information. Cette disposition permet entre autres de combiner l'invention, dans un but de sécurité accrue à des techniques de codage ou d'encryptage.

Chaque cellule comporte un chemin de lecture à un amplificateur de lecture 4 ou 5, classique pour toute cellule du plan mémoire. Les sorties des amplis sont connectées à un noeud constitué dans un exemple de réalisation par un circuit de logique combinatoire. Celui-ci comporte dans un mode de réalisation une porte NON ET 6 dont la sortie 8 est connectée à un organe de décodage des adresses de la mémoire utile.

Ainsi, dans le procédé de l'invention, un mode de fonctionnement implique une région d'adresses particulières de la mémoire. Chaque région peut être une succession d'adresses successives. Les régions peuvent être disjointes deux à deux. Le but de l'invention dans tous les cas est d'interdire l'accès à une région d'adresses ne correspondant pas au mode de fonctionnement programmé des cellules 1 et 2, c'est-à-dire sélectionné par le fabricant du circuit de l'invention quand il enregistre les cellules 1 et 2.

Dans un mode de réalisation, la mémoire est du type EPROM de 8 kilo-octets d'adresse. Deux modes de fonctionnement seulement sont prévus. Les deux régions d'adresses correspondantes sont non disjointes. La première région comporte les 4 kilo-octets d'adresses du début de la mémoire et la seconde région comporte 8 kilo-octets complets de la mémoire.

A la figure 2, on a représenté un circuit selon l'invention. Un décodeur 15 reçoit du circuit de gestion 13 qui correspond à un circuit de protection pour la mémoire, un signal 14 lui indiquant quelle région d'adresses 18 ou 19 il peut atteindre dans la mémoire 20 du type EPROM, ce décodeur reçoit également les adresses AD d'un réseau programmable (PLA) 11. Pour celà, il comporte deux sorties 16 et 17 connectées à l'une ou à l'autre des deux régions du décodeur d'adresses de la mémoire.

La programmation de la cellule est réalisée par son entrée 12. Un réseau programmable PLA 11 sert à établir les niveaux de programmation. Son entrée de commande 31 est protégée par un fusible 30. Une fois le fusible claqué, la reprogrammation de la cellule 13 est impossible.

A la figure 3, le chronogramme indique l'état des deux bus d'accès 16 et 17. On constate qu'ils sont exclusivement actifs.

A la figure 4, on a représenté une partie du dessin de la mémoire. Un carré de trois cellules de large ou quatre cellules de haut est réservé à la constitution pour permettre de sauvegarder la régularité du dessin. Le couple 24 de cellules 22 et 23 permet de prévoir la programmation selon l'invention.

## Revendications

1. Circuit intégré comportant une mémoire (20) qui comprend deux régions d'adresses (18, 19) sélectionnables, caractérisé en ce qu'il comprend en outre deux cellules mémoires (1, 2) programmées, un décodeur d'adresse de la mémoire (15), les cellules étant lues lors de l'adressage de la mémoire, le signal lu permettant de commander le décodeur (15) de manière à obtenir la sélection de l'une des régions d'adresse ou de l'autre, selon l'état de ces cellules.

2. Circuit intégré selon la revendication 1, caractérisé en ce qu'il comprend un circuit d'écriture (3) des cellules mémoires et un circuit de sélection des cellules (7), permettant de programmer ces cellules, ces cellules (1, 2) étant lues en permanence lors de l'adressage de la mémoire.

3. Circuit intégré selon la revendication 1 ou 2, caractérisé en ce que la mémoire (20) est de type EPROM et en ce que les cellules sont constituées par deux transistors (1, 2) à grilles isolées de cette mémoire, une électrode principale de ces deux transistors étant reliée via un amplificateur à une entrée d'une porte ET (6), le signal de sortie de la porte étant utilisé par le décodage des adresses de la mémoire.

**Patentansprüche**

1. Integrierte Schaltung, mit einem zwei auswählbare Adressenbereiche (18, 19) aufweisenden Speicher (20), dadurch gekennzeichnet, daß sie außerdem zwei programmierte Speicherzellen (1, 2) und einen Speicheradressendekodierer (15) umfaßt, wobei die Zellen während der Adressierung des Speichers gelesen werden und wobei das gelesene Signal die Steuerung des Dekodierers (15) erlaubt, derart, daß die Auswahl eines der Adressenbereiche oder des anderen entsprechend dem Zustand dieser Zellen erhalten wird.

2. Integrierte Schaltung gemäß Anspruch 1, dadurch gekennzeichnet, daß sie eine Schaltung (3) zum Beschreiben der Speicherzellen und eine Schaltung (7) zur Auswahl der Zellen umfaßt, die die Programmierung dieser Zellen (1, 2) erlauben, wobei diese Zellen während der Adressierung des Speichers ständig gelesen werden.

3. Integrierte Schaltung gemäß Anspruch 1 oder 2, dadurch gekennzeichnet, daß der Speicher (20) von EPROM-Bauart ist und daß die Zellen von zwei Transistoren (1, 2) mit isoliertem Gate dieses Speichers gebildet werden, wobei eine Hauptelektrode dieser zwei Transistoren über einen Verstärker mit einem Eingang eines UND-Gatters (6) verbunden ist und wobei das Ausgangssignal des Gatters zur Dekodierung der Adressen des Speichers verwendet wird.

**Claims**

1. An integrated circuit having a memory (20) which comprises two selectable address regions (18, 19), characterized in that it further comprises two programmed memory cells (1, 2), an address decoder (15) for the memory, the cells being read upon memory addressing, the reading signal allowing to control the decoder (15) in order to obtain the selection of one or the other of the address regions according to the state of its cells.

2. An integrated circuit according to claim 1, characterized in that it comprises a write circuit (3) for the memory cells and a cell selection circuit (7) for programming these cells (1, 2), these cells being permanently read upon memory addressing.

3. An integrated circuit according to either claim 1 or 2, characterized in that the memory (20) is an EPROM-type memory and that the cells consist of two insulated emittor transistors (1, 2) of this memory, a main electrode of these two transistors being connected via an amplifier to an input terminal of an AND gate (6), the output signal of the gate being used by the decoding of the addresses of the memory.

EP 0 255 414 B1

# FIG_1

ECRITURE

SELECTION

# FIG_2

PLA

AD

Cell.

DECODEUR

EPROM

# FIG_3

# FIG_4